(19) Europäisches Patentamt
European Patent Office
Office européen des brevets

(11) Numéro de publication: **0 451 003 B1**

(12) **FASCICULE DE BREVET EUROPEEN**

(45) Date de publication de fascicule du brevet: **24.05.95**

(51) Int. Cl.[6]: **C01F 17/00**, C22B 3/00

(21) Numéro de dépôt: **91400703.4**

(22) Date de dépôt: **15.03.91**

# (54) Procédé de séparation de l'yttrium.

(30) Priorité: **04.04.90 FR 9004300**

(43) Date de publication de la demande:
**09.10.91 Bulletin 91/41**

(45) Mention de la délivrance du brevet:
**24.05.95 Bulletin 95/21**

(84) Etats contractants désignés:
**AT BE DE DK ES FR GB GR IT LU NL**

(56) Documents cités:
**EP-A- 0 143 749**
**EP-A- 0 199 905**
**EP-A- 0 238 402**
**EP-A- 0 341 119**
**EP-A- 0 347 284**
**US-A- 3 985 856**
**US-A- 4 128 493**

(73) Titulaire: **RHONE-POULENC CHIMIE**
**25, Ouai Paul Doumer**
**F-92408 Courbevoie Cédex (FR)**

(72) Inventeur: **Sabot, Jean Louis**
**3 avenue Pascal**
**F-78600 Maison Laffitte (FR)**
Inventeur: **Delloye, Thierry**
**6 passage de Blois**
**F-17180 Perigny (FR)**

(74) Mandataire: **Esson, Jean-Pierre et al**
**RHONE-POULENC CHIMIE,**
**Direction de la Propriété Industrielle,**
**25, quai Paul Doumer**
**F-92408 Courbevoie Cédex (FR)**

**EP 0 451 003 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un procédé de séparation de l'yttrium contenu dans une solution.

Elle se rapporte plus particulièrement à un procédé de séparation de l'yttrium contenu dans une solution comprenant en outre de l'yttrium, d'autres terres rares.

Par le terme "terres rares" on entend les éléments de la famille des lanthanides ayant un numéro atomique allant de 57 à 71 inclus ainsi que l'yttrium portant le numéro atomique 39.

Dans l'exposé qui suit, le terme "terres rares cériques" désigne les éléments les plus légers des terres rares commençant par le lanthane et allant jusqu'au néodyme, le terme "terres rares yttriques", les éléments les plus lourds des terres rares, commençant avec le samarium et finissant avec le lutécium et incluant l'yttrium.

La séparation des terres rares contenues dans les solutions d'attaque de minerais variés, tels que, par exemple, la gadolinite, cérite, monazite, xénotime, bastnaésite ou analogues, est difficile à réaliser du fait que les différences de propriété d'une terre rare par rapport à celles de ses voisines sont extrêmement faibles.

Cette séparation est d'autant plus difficile que la terre rare doit être récupérée de manière isolée par rapport aux éléments du même sous-groupe, comme par exemple, la séparation du cérium des autres terres rares appartenant au groupe des "terres rares cériques".

Ces séparations sont réalisées par la mise en oeuvre de procédés d'extraction par un agent extractant contenu dans une phase non miscible à la solution, généralement aqueuse, contenant les terres rares.

Comme procédés habituellement utilisés, on peut citer les procédés d'extraction liquide/liquide dans lesquels l'agent extractant est solubilisé dans un diluant organique non miscible à l'eau, les procédés utilisant des résines sur lesquelles est adsorbé l'agent extractant.

La séparation sélective d'un élément par rapport aux autres éléments est obtenue par le choix de l'agent extractant et des conditions d'extraction. Toutefois, il est difficile de prévoir qu'un extractant convenable pour extraire un élément donné, le sera également pour extraire un autre élément. De plus, les conditions d'extraction pour un élément ne sont également pas déductibles des conditions utilisées pour l'extraction d'un autre élément.

Parmi les terres rares, l'yttrium est un élément utilisé notamment dans les compositions de luminophores tant pour les applications tube cathodique de télévision que dans les lampes.

Il peut donc être intéressant de séparer directement en une étape l'yttrium des autres terres rares contenues dans une solution, notamment quand cet élément est prépondérant.

C'est un des buts de l'invention de proposer un procédé de séparation sélective de l'yttrium par rapport aux autres éléments de terres rares.

Un procédé de séparation sélective de l'yttrium a été décrit dans le brevet américain n° 3 575 687. Ce procédé consiste à utiliser comme agent d'extraction un mélange d'un agent extractant anionique du type composé d'ammonium ou phosphonium quaternaire, avec un agent d'extraction cationique choisi dans le groupe des phosphates aliphatiques et aromatiques, et des acides carboxyliques.

Toutefois, ce mélange d'extractants présente plusieurs inconvénients comme par exemple une sélectivité médiocre entre l'yttrium et les terres rares lourdes appartenant au groupe des "terres rares yttriques".

Cet extractant présente également d'autres inconvénients en particulier une réextraction difficile des terres rares contenues dans la phase organique.

L'invention a notamment pour but de remédier à ces inconvénients en proposant un procédé de séparation sélective de l'yttrium par extraction des autres terres rares par un agent extractant contenu dans une phase non miscible à l'eau présentant une bonne sélectivité entre l'yttrium et les autres terres rares et notamment les éléments appartenant au groupe "des terres rares yttriques".

A cet effet, l'invention propose un procédé de séparation sélective de l'yttrium à partir de solutions aqueuses contenant au moins des ions nitrates et d'autres terres rares, consistant à mettre en contact ladite solution avec une phase non miscible à ladite solution aqueuse et contenant un agent extractant, caractérisé en ce que l'agent extractant est constitué par un mélange :

- d'un agent extractant anionique choisi dans le groupe comprenant les composés d' ammonium, de phosphonium ou d' arsenium de formule générale (I) :

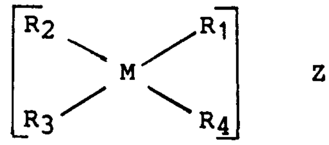

dans laquelle : M est l'azote, le phosphore ou l'arsenic

Z est un anion

$R_1$, $R_2$, $R_3$, $R_4$ identiques ou différents représentent un radical aliphatique hydrocarboné comprenant de 1 à 18 atomes de carbone ou un groupe aromatique, et

- une hydroxy quinoléine substituée de formule générale (II)

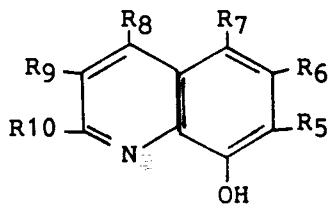

dans laquelle : les substituants $R_5$, $R_6$, $R_7$, $R_8$, $R_9$, $R_{10}$ identiques ou différents représentent l'hydrogène, les halogènes, ou un radical hydrocarboné substitué ou non choisi dans le groupe comprenant : les radicaux alkyle, alcényle, cycloaliphatique, aromatique, et en ce que au moins un de ces substituants représente un radical hydrocarboné du groupe ci-dessus comprenant de 8 à 20 atomes de carbone.

Selon une autre caractéristique de l'invention, l'hydroxyquinoléine substituée a comme formule générale III :

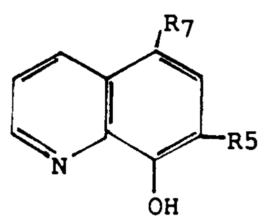

dans laquelle :

- $R_5$ représente un groupe alcényle substitué ou non comprenant de 8 à 20 atomes de carbone
- $R_7$ représente l'hydrogène, un halogène ou un radical hydrocarboné substitué ou non choisi dans le groupe comprenant les radicaux alkyle, alcényle, cycloaliphatique, aromatique.

Parmi ces hydroxyquinoléines, celles convenant particulièrement aux fins de l'invention sont notamment :

- les $\alpha$ alcényl hydroxy-8 quinoléines ayant pour formule générale IV :

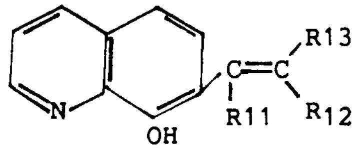

dans laquelle $R_{11}$, $R_{12}$, $R_{13}$ représentent un hydrogène ou un groupement hydrocarboné éventuellement substitué ;

- les $\beta$ alcényl hydroxy-8 quinoléines ayant pour formule générale V :

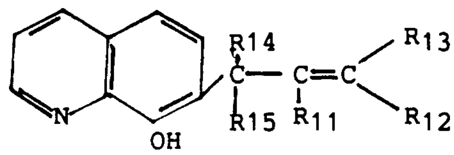

dans laquelle $R_{11}$, $R_{12}$, $R_{13}$,$R_{14}$, $R_{15}$ représentent un hydrogène ou un groupement hydrocarboné éventuellement substitué ;

Conviennent également particulièrement aux fins de l'invention, les alkyl hydroxy-8 quinoléines ayant pour formule générale VI :

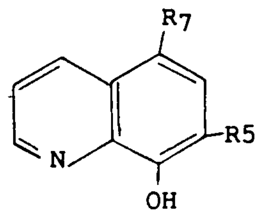

dans laquelle $R_5$ représente un radical, éventuellement substitué, alkyle et/ou cycloaliphatique, et contenant de préférence de 8 à 20 atomes de carbone, $R_7$ représentant l'hydrogène, un halogène ou un radical hydrocarboné substitué ou non choisi dans le groupe comprenant les radicaux alkyle, alcényle, cycloaliphatique, aromatique.

Conviennent également aux fins de l'invention, les hydroxy-8 quinoléines de formule générale VII :

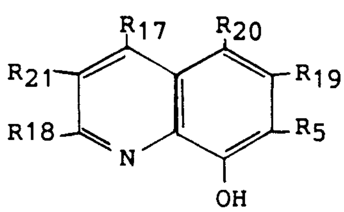

dans laquelle $R_5$ représente un radical hydrocarboné éventuellement substitué alkyle et/ou cycloaliphatique et $R_{17}$, $R_{18}$, $R_{19}$, $R_{20}$, $R_{21}$ représentent un hydrogène ou un groupement hydrocarboné éventuellement substitué.

Conviennent également aux fins de l'invention, les hydroxy-8 quinoléines de formule générale VIII :

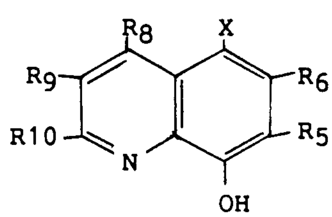

dans laquelle X est choisi parmi le groupe constitué par les halogènes, $R_5$ est un radical alkyle ou alcényle contenant de préférence de 8 à 20 atomes de carbone, $R_8$, $R_9$, $R_{10}$ ont la signification indiquée à la formule II.

A titre d'exemple, on peut citer comme hydroxyquinoléines substituées convenables et commercialement disponibles, les produits commercialisés par la société SCHERING sous les noms commerciaux "Kelex 100", (formule V ou VI), "Kelex 108" (formule VI) et par la société HENKEL sous le nom commercial "LIX 26".

Les agents extractants anioniques de formule générale I convenable pour l'invention sont notamment ceux commercialisés sous les noms commerciaux "ALIQUAT 336" par HENKEL, "ADOGEN 464" par SCHERING ou "HOE S 2706" par HOECHST.

La phase non miscible à l'eau contenant les agents extractants comprend également un diluant organique, généralement neutre vis à vis du pouvoir extractant des agents.

Comme diluants susceptibles d'être utilisés, on citera les hydrocarbures aromatiques comme le xylène, le toluène, le benzène, le diéthylbenzène ou des coupes pétrolières du type Solvesso (marque déposée par EXXON) ; les hydrocarbures aliphatiques comme l'hexane, le cyclohexane, et les coupes pétrolières du type kérosène ; les hydrocarbures halogénés comme le chloroforme, le tétrachlorure de carbone ; les éthers de pétrole et analogues. Ces diluants peuvent être utilisés seuls ou en mélange.

La phase organique peut également contenir divers agents modifieurs ayant notamment pour but d'améliorer les propriétés hydrodynamiques du système sans altérer les propriétés complexantes des agents extractrants. A titre d'exemple d'agent modifieur, on peut citer les alcools aliphatiques, alkylphénols, phosphates, phosphonates ou phosphinates d'alkyle ou d'aryle, oxyde d'alkyl ou aryl phosphines, les sulfoxydes d'alkyle ou d'aryle, les éthers, les cétones aliphatiques ou aromatiques.

Le pouvoir d'extraction de la phase organique vis à vis des terres rares augmente lorsque la concentration en agents extractants augmente.

Toutefois, le facteur de séparation entre l'yttrium et les autres terres rares est peu affecté par la concentrattion en agents extractants. Ainsi, la concentration en hydroxyquinoléine substituée et agent anionique peut varier dans de larges limites.

Pratiquement, la concentration en agents extractants dans la phase organique est déterminée par les propriétés hydrodynamiques (notamment viscosité) du système.

En outre, le rapport hydroxyquinoléine/agent anionique peut également varier dans de larges limites sans trop affecter le facteur de séparation entre l'yttrium et les terres rares.

Selon un mode de réalisation préféré de l'invention, la concentration en hydroxyquinoléine dans la phase organique peut avantageusement varier entre 0,05 mole /litre et 1,25 mole /litre environ.

La concentration en agent anionique peut, quant à elle, avantageusement varier entre 0,1 mole/l et 0,7 mole/l.

Selon une autre caractéristique de l'invention, la solution aqueuse contenant l'yttrium comprend également des ions nitrates provenant soit de l'ionisation des sels d'yttrium et/ou de terres rares, soit de l'addition d'un composé comprenant des ions nitrates, tel que l'acide nitrique, les nitrates d'ammonium, ou nitrates d'alcalins et d'alcalino-terreux.

La concentration en ions nitrates est avantageusement supérieure à une mole/litre, et préférentiellement entre 1 mole/l et 10 mole/l.

Avantageusement, le pH de la solution à traiter sera compris entre 1 et 7, bornes incluses. Toutefois, ce pH peut varier dans de grandes limites.

L'extraction est réalisée à une température indifférente. Avantageusement, cette température est comprise entre la température ambiante (15 °C - 25 °C) et 60 °C.

La solution aqueuse d'yttrium est obtenue par mise en solution de composés de terres rares solubles provenant de l'attaque de minerai ou de scraps contenant de l'yttrium et des terres rares. Le type et la nature de ces composés et des sources de terres rares sont indifférents.

Les concentrations en terres rares et/ou en yttrium dans la solution aqueuse sont indifférentes.

Pour caractériser l'efficacité de la séparation yttrium/terres rares, on détermine les coefficients de partage Py,$P_{TR}$ et le facteur de séparation $F_{TR/Y}$ dont les définitions sont données ci-dessous.

Par coefficient de partage de l'yttrium Py, on entend le rapport

$$\frac{[Y]org}{[Y]aq}$$

dans lequel [Y]org est la concentration en yttrium dans la phase organique

[Y]aq est la concentration en yttrium dans la phase aqueuse.

Par facteur de séparation $F_{TR/Y}$ on entend le rapport $P_{TR/Py}$ dans lequel $P_{TR}$ est le coefficient de partage des terres rares, conforme à la définition de $P_Y$.

Le procédé de l'invention est mis en oeuvre selon les modalités classiques des procédés d'extraction liquide/liquide, par exemple dans une ou plusieurs batteries de mélangeur-décanteur.

La solution aqueuse récupérée contient l'yttrium, tandis que les terres rares sont extraites par la phase organique.

Les terres rares peuvent être ensuite réextraites par lavage de la phase organique avec de l'eau ou une solution acide, la solution de terres rares ainsi récupérée pouvant être traitée par tout procédé connu pour séparer celles-ci, par exemple.

La solution aqueuse contenant l'yttrium est traitée pour récupérer un composé d'yttrium. Ce traitement est fonction de la pureté désirée de l'yttrium récupéré. Ainsi, cette solution peut être soumise à plusieurs étapes de purification, de concentration ou analogue.

L'yttrium est récupéré soit par précipitation, soit par extraction liquide/liquide ou échange d'ions, soit par électrolyse ou tout autre procédé convenable.

Le procédé de récupération de l'yttrium conforme à l'invention est de préférence mis en oeuvre selon un procédé d'extraction liquide/liquide à contre-courant. Toutefois, l'invention n'est pas limitée à cette technique. C'est ainsi que l'invention pourra être mise en oeuvre avec une technique d'adsorption sur une résine poreuse utilisée comme support des agents extractants. Ces agents extractants sont alors imprégnés sur la résine soit sous forme pure, soit en solution dans un diluant du type décrit précédemment, par exemple.

L'invention propose donc un procédé de récupération de l'yttrium permettant de séparer celui-ci des autres terres rares en une seule étape, et de récupérer aisément d'une part les terres rares, et d'autre part l'yttrium.

Les exemples ci-dessous donnés uniquement à titre indicatif permettront de mieux illustrer les caractéristiques, avantages et buts de l'invention.

**EXEMPLE 1**

Une phase organique appelée également solvant est mise en contact volume à volume avec une solution aqueuse de nitrate de terres rares.

La composition volumique du solvant est :

- agent anionique : "aliquat 336" 30 %
- hydroxyquinoléine : "Kelex 100" 15 %
- diluant : "Solvesso 150" 55 %

Le diluant est commercialisé par la société EXXON.

"Aliquat 336" est un mélange contenant des sels d'ammonium quaternaire commercialisé par la société HENKEL.

"Kelex 100" est une hydroxyquinoléine substituée répondant à la formule générale VI commercialisée par la société SCHERING.

La composition de la solution aqueuse est :

- nitrates de terres rares et d'yttrium à 1,66 mole/l avec un rapport massique $Y_2O_3/T_{R2}O_3$ égal à 99,75 %, ou un rapport $Ln_2O_3/Y_2O_3$ égal à 2500 ppm ($Ln_2O_3$ représentant les lanthanides).

Les coefficients de partage $P_Y$ et facteur de séparation $F_{TR/Y}$ ont été déterminés pour un pH d'extraction égal à 4,1.

Les résultats sont rassemblés dans le tableau I ci-dessous.

**TABLEAU I**

| | Ce | Pr | Nd | Sm | Eu | Gd | Tb | Dy | Ho | Er | Tm | Yb | Lu |
|---|---|---|---|---|---|---|---|---|---|---|---|---|---|
| F TR/Y à pH 4,1 Py=0,107 Ex. 1 | 180 | 64 | 23 | 15 | 8,5 | 4,9 | 4,5 | 3,6 | 2,8 | 2,3 | 2 | 2,9 | 1,4 |

**EXEMPLE 2**

Les conditions de mise en oeuvre sont identiques à celles de l'exemple 1. Le pH d'extraction est de 4,5.

La solution aqueuse contient également des nitrates de terres rares et d'yttrium à une concentration de 1,66 mole/l et avec un rapport $Y_2O_3$ par rapport aux oxydes de terres rares totaux égal à 2 % en masse.

Les facteurs de séparation de l'exemple 2, indiqués dans le tableau II, comparés à ceux de l'exemple 1 ci-dessus montrent l'influence du rapport $Y_2O_3/T_{R2}0_3$.

**TABLEAU II**

| | Ce | Nd | Eu | Gd | Tb | Tm | Lu |
|---|---|---|---|---|---|---|---|
| F TR/Y à pH 4,5 Py = 0,0116 Ex. 2 | 16,5 | 10,7 | 8,6 | 5,0 | 9,6 | 9,0 | 10,3 |

**EXEMPLE 3** :

On répète le mode opératoire de l'exemple 1 mais en utilisant un solvant de composition volumique suivante :

| | |
|---|---|
| "Aliquat 336" | 30 % |
| "Kelex 100" | 10 % |
| "Solvesso" | 60 % |

et comme solution aqueuse, une solution de chlorure de terres rares à 0,166 mole/l à laquelle on a ajouté du nitrate d'ammonium pour avoir une concentration de 4 mole/l en $NO_3^-$.

La teneur en $Y_2O_3$ par rapport aux oxydes totaux est de 99,75 %.

L'extraction a été réalisée à un pH de 5,7.

Le coefficient de partage Py est égal à 0,162.

Les facteurs de séparation $F_{TR/Y}$ sont rassemblés dans le tableau IV ci-dessous.

**TABLEAU IV**

| TR | La | Ce | Pr | Nd | Sm | Eu | Gd | Tb | Dy | Ho | Er | Tm | Yb | Lu |
|---|---|---|---|---|---|---|---|---|---|---|---|---|---|---|
| $F_{TR/Y}$ Ex. 3 | 61 | 43 | 28 | 15,3 | 8,5 | 7,2 | 3,9 | 4,4 | 3,9 | 3,5 | 2,7 | 2,6 | 3,3 | 2,6 |

## EXEMPLES 4 A 7

Le tableau V ci-dessous rassemble les résultats obtenus pour des essais réalisés avec différents solvants selon les conditions opératoires de l'exemple 1.

TABLEAU V

| SOLVANT % volumique | pH | Py | F Yb/y | F Er/y | F Dy/y | F Sm/y |
|---|---|---|---|---|---|---|
| Aliquat "336" 30 %<br>Solvesso 65 %<br>Kelex 100 5 %<br>ex. 4 | 4,94 | 0,0237 | 2,25 | 2,77 | 5,37 | 11,63 |
| Aliquat "336" 30 %<br>Solvesso 65 %<br>Kelex 108 5 %<br>ex. 5 | 5,11 | 0,0276 | 3,12 | 2,62 | 5 | 10,04 |
| Aliquat "336" 30 %<br>Solvesso 65 %<br>Kelex Chloré* 5 %<br>ex. 6 | 5,18 | 0,0319 | 4,18 | 2,64 | 4,49 | 11,06 |
| Aliquat "336" 30 %<br>Solvesso 65 %<br>LIX 26 5 %<br>ex. 7 | 5,23 | 0,0299 | 3,77 | 2,72 | 4,73 | 10,65 |

* : hydroquinoléine de fomule VIII : chloro 5(éthyl 2 hexyl)7 hydroxy 8 quinoléine

**EXEMPLE 8**

La séparation de l'yttrium et des terres rares est réalisée en continu dans une installation représentée à la figure unique ci-jointe.

Cette installation comprend une batterie 1 de mélangeurs-décanteurs et un bac 2 de préneutralisation du solvant.

Le solvant est alimenté en 5 dans le bac de préneutralisation. Une solution basique, par exemple de l'ammoniaque est ajoutée en 3 dans le bac 2.

Le solvant préneutralisé est alimenté dans la batterie 1 et sort de celle-ci en 6 pour être introduit dans une installation non représentée de récupération des terres rares, par exemple par réextraction avec une solution d' acide minéral (acide chlorhydrique, acide nitrique). Le solvant est ensuite recyclé en 5.

La solution de terres rares et d'yttrium à traiter est alimentée en 4 à un étage intermédiaire de la batterie et ressort après extraction des terres rares en 7.

Une solution contenant des terres rares mais exempte d'yttrium est alimentée en 8, en début de batterie pour appauvrir en yttrium le solvant.

Le bilan matière de l'installation est le suivant :

- solution aqueuse alimentée en 4 :

| | | |
|---|---|---|
| concentration en terres rares + yttrium | | 1,33 mole/l |
| pH | | 4 |
| répartition des terres rares | $Y_2O_3$<br>$Ln_2O_3$ | 40 %<br>60 % |
| débit | | 80 l/h |

- solution de terres rares alimentée en 8 :

| | |
|---|---|
| concentration en lanthanides<br>pH<br>débit | 1,66 mole/l<br>4,0<br>100 l/h |

- solvant alimenté en 5 :

| | |
|---|---|
| "Aliquat 336"<br>"Kelex 100"<br>Solvesso<br>débit | 30 %<br>15 %<br>55 %<br>1 $m^3$/h |

- solution basique alimentée en 3 :

| | |
|---|---|
| $NH_4OH$<br>débit | 10 mole/l<br>10 l/h |

- solution aqueuse chargée en yttrium sortante de la batterie en 7 :

| | | |
|---|---|---|
| concentration | en yttrium<br>en $NH_4NO_3$ | 0,24 mole/l<br>0,55 mole/l |
| rapport $Y_2O_3/TR_2O_3$ > 99,99 % | | |
| débit | | 180 l/h |

- solvant chargé en terres rares sortant en 6 :

| | |
|---|---|
| concentration totale en terres rares | 0,2 mole/l |
| rapport $Y_2O_3/TR_2O_3$ < 700 ppm | |
| débit | 1 $m^3$/h. |

## Revendications

**1.** Procédé de séparation sélective des valeurs d'yttrium à partir de solution aqueuse contenant au moins des ions nitrates, et des valeurs d'autres terres rares, consistant à mettre en contact ladite solution avec une phase organique immiscible à l'eau et contenant un agent extractant caractérisé en ce que l'agent extractant est constitué par

- un agent extractant anionique choisi dans le groupe comprenant les composés d'ammonium, de phosphonium ou d'arsenic de formule générale (I) :

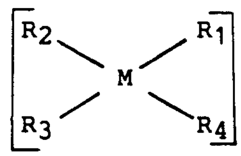

dans laquelle : M est l'azote, le phosphore ou l'arsenic

Z est un anion

$R_1$, $R_2$, $R_3$, $R_4$ identiques ou différents représentent un radical aliphatique hydrocarboné comprenant de 1 à 18 atomes de carbone ou un groupe aromatique, et

- une hydroxy quinoléine substituée de formule générale (II) :

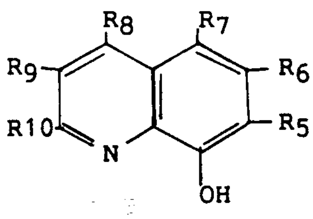

dans laquelle :

$R_5$, $R_6$, $R_7$, $R_8$, $R_9$, $R_{10}$, identiques ou différents représentent l'hydrogène, les halogènes, ou au moins un des radicaux hydrocarbonés substitués ou non : alkyle, alcényle, cycloaliphatique, aromatique, et en ce que un au moins de ces radicaux représente un radical hydrocarboné comprenant de 8 à 20 atomes de carbone.

**2.** Procédé selon la revendication 1, caractérisé en ce que l'hydroxyquinoléine substitutée a pour formule générale (III):

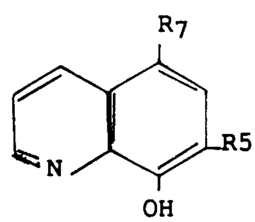

dans laquelle :

$R_5$ est un radical alcényle substitué ou non comprenant de 8 à 20 atomes de carbone

$R_7$ est l'hydrogène, un halogène ou un radical hydrocarboné substitué ou non alkyle, alcényle cycloaliphatique, aromatique.

**3.** Procédé selon la revendication 2, caractérisé en ce que $R_5$ représente le radical de formule générale suivante :

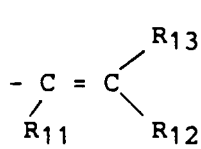

dans laquelle $R_{11}$, $R_{12}$, $R_{13}$ représente un hydrogène ou un groupement hydrocarboné substitué ou non alkyl aromatique ou alkylaryle.

**4.** Procédé selon la revendication 2, caractérisé en ce que $R_5$ représente le radical de formule générale suivante :

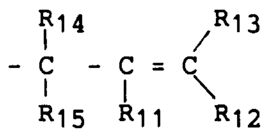

dans laquelle $R_{11}$, $R_{12}$, $R_{13}$, $R_{14}$, $R_{15}$ identiques ou différents représente un hydrogène ou un groupement hydrocarboné substitué ou non.

**5.** Procédé selon la revendication 1, caractérisé en ce que $R_5$ représente un groupement $C_n$ $H_{2n+1}$ avec n un nombre entier compris entre 8 et 20.

**6.** Procédé selon la revendication 1 caractérisé en ce que l'hydroxyquinoléine substituée a comme formule générale VIII :

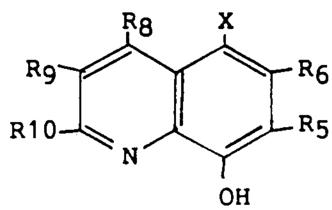

dans laquelle $R_5$ est un radical alkyle ou alcényle comprenant de 8 à 20 atomes de carbone ; X est un halogène.

**7.** Procédé selon l'une des revendications précédentes caractérisé en ce que la solution aqueuse contient au moins 1 mole/l d'ions nitrate, de préférence entre 1 et 10 mole/l.

**8.** Procédé selon l'une des revendications précédentes caractérisé en ce que le pH de la solution aqueuse à traiter est compris entre 1 et 7.

**9.** Procédé selon l'une des revendications précédentes, caractérisé en ce que la concentration en agent extractant anionique est comprise entre 0,1 mole/l et 0,7 mole/l.

**10.** Procédé selon l'une des revendications précédentes caractérisé en ce que la concentration en hydroxyquinoléine substituée est comprise entre 0,05 mole/l et 1,25 mole/l.

**11.** Procédé selon l'une des revendications précédentes, caractérisé en ce que les terres rares présentes dans la phase organique sont réextraits par lavage avec une solution acide.

**12.** Procédé selon l'une des revendications précédentes, caractérisé en ce que l'yttrium présent dans la solution aqueuse après extraction des autres terres rares est récupéré par extraction liquide-liquide.

**13.** Procédé selon l'une des revendications 1 à 11, caractérisé en ce que l'yttrium présent dans la solution aqueuse après extraction des autres terres rares est récupéré par précipitation.

## Claims

**1.** A process for the selective separation of the values of yttrium from an aqueous solution containing at least nitrate ions and values of other rare earths, comprising bringing said solution into contact with an organic water-immiscible phase containing an extracting agent characterised in that the extracting agent is formed by:

- an anionic extracting agent selected from the group comprising compounds of ammonium, phosphonium or arsenic of the general formula (I):

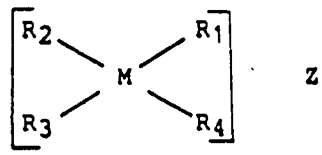

in which: M is nitrogen, phosphorus or arsenic

Z is an anion and

$R_1$, $R_2$, $R_3$ and $R_4$ which are identical or different represent an aliphatic hydrogen radical containing from 1 to 18 carbon atoms or an aromatic group, and

- a substituted hydroxyquinoline of the general formula (II):

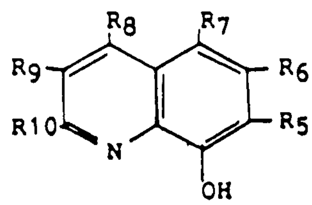

in which: $R_5$, $R_6$, $R_7$, $R_8$, $R_9$ and $R_{10}$ which are identical or different represent hydrogen, halogens or at least one of the substituted or unsubstituted hydrocarbon radicals: alkyl, alkenyl, cycloaliphatic and aromatic, and that one at least of said radicals represent a hydrocarbon radical containing fro 8 to 20 carbon atoms.

2. A process according to claim 1 characterised in that the substituted hydroxyquinoline has the following general formula (III):

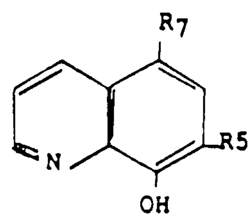

in which:

$R_5$ is a substituted or unsubstituted alkenyl radical containing from 8 to 20 carbon atoms, and

$R_7$ is hydrogen, a halogen or a substituted or unsubstituted hydrocarbon radical: alkyl, alkenyl, cycloaliphatic and aromatic.

3. A process according to claim 2 characterised in that $R_5$ represents the radical of the following general formula:

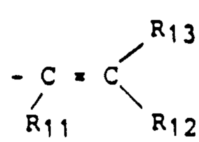

in which $R_{11}$, $R_{12}$ and $R_{13}$ represent a hydrogen or a substituted or unsubstituted hydrocarbon group, alkyl, aromatic or alkylaryl.

4. A process according to claim 2 characterised in that $R_5$ represents the radical of the following general formula:

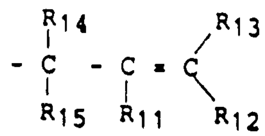

in which $R_{11}$, $R_{12}$, $R_{13}$, $R_{14}$ and $R_{15}$ which are identical or different represent a hydrogen or a substituted or unsubstituted hydrocarbon group.

5. A process according to claim 1 characterised in that $R_5$ represents a group $C_n H_{2n+1}$ with n being an integer of between 8 and 20.

6. A process according to claim 1 characterised in that the substituted hydroxyquinoline has the following general formula (VIII):

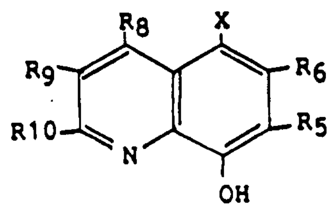

in which $R_5$ is an alkyl or alkenyl radical containing from 8 to 20 carbon atoms and X is a halogen.

7. A process according to one of the preceding claims characterised in that the aqueous solution contains at least 1 mol/l of nitrate ions, preferably between 1 and 10 mols/l.

8. A process according to one of the preceding claims characterised in that the pH-value of the aqueous solution to be treated is between 1 and 7.

9. A process according to one of the preceding claims characterised in that the concentration of anionic extracting agent is between 0.1 mol/l and 0.7 mol/l.

10. A process according to one of the preceding claims characterised in that the concentration of substituted hydroxyquinoline is between 0.05 mol/l and 1.25 mol/l.

11. A process according to one of the preceding claims characterised in that the rare earths present in the organic phase are re-extracted by washing with an acid solution.

12. A process according to one of the preceding claims characterised in that the yttrium present in the aqueous solution after extraction of the other rare earths is recovered by liquid-liquid extraction.

13. A process according to one of claims 1 to 11 characterised in that the yttrium present in the aqueous solution after extraction of the other rare earths is recovered by precipitation.

**Patentansprüche**

1. Verfahren zur selektiven Trennung von Yttrium und anderen Seltenen Erden, ausgehend von einer wäßrigen Lösung, die mindestens Nitrationen enthält, bestehend aus dem Kontaktieren der genannten Lösung mit einer mit Wasser nicht mischbaren organischen Phase, die ein Extraktionsmittel enthält, dadurch gekennzeichnet, daß das Extraktionsmittel sich zusammensetzt aus:

- einem anionischen Extraktionsmittel aus der Gruppe der Ammonium-, Phosphonium- oder Arsenverbindungen der allgemeinen Formel (I):

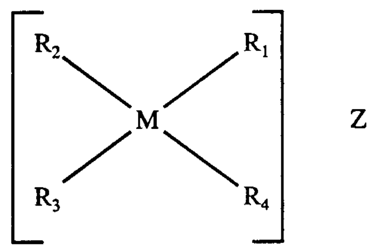

in der:
- M ein Stickstoff-, Phosphor- oder Arsenatom ist,
- Z ein Anion ist,
- $R_1$, $R_2$, $R_3$ und $R_4$, gleich oder verschieden, einen aliphatischen Kohlenwasserstoffrest mit 1 bis 18 Kohlenstoffatomen oder eine aromatische Gruppe darstellen, und
- einem substituierten Hydroxychinolin der allgemeinen Formel (II):

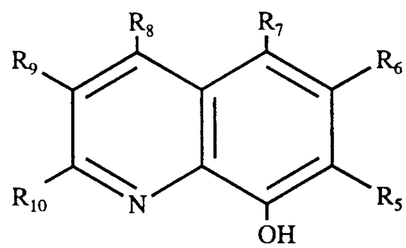

in der:
- $R_5$, $R_6$, $R_7$, $R_8$, $R_9$ und $R_{10}$, gleich oder verschieden, ein Wasserstoffatom oder Halogenatome oder mindestens einen der substituierten oder nichtsubstituierten Kohlenwasserstoffreste, wie ein Alkyl-, Alkenyl-, cycloaliphatischer oder aromatischer Rest, darstellen; und daß mindestens einer dieser Reste ein Kohlenwasserstoffrest mit 8 bis 20 Kohlenstoffatomen darstellt.

**2.** Verfahren nach Anspruch 1, dadurch gekennzeichnet, daß das substituierte Hydroxychinolin der allgemeinen Formel (III) entspricht:

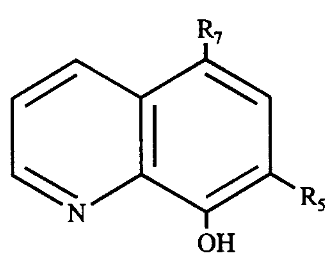

in der:
- $R_5$ ein substituierter oder nichtsubstituierter Alkenylrest mit 8 bis 20 Kohlenstoffatomen ist,
- $R_7$ ein Wasserstoff- oder Halogenatom oder ein substituierter oder nichtsubstituierter Kohlenwasserstoff-, Alkyl-, cycloaliphatischer Alkenyl- oder aromatischer Rest ist,

**3.** Verfahren nach Anspruch 2, dadurch gekennzeichnet, daß $R_5$ ein Rest der folgenden allgemeinen Formel ist:

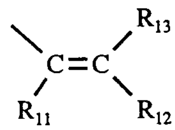

in der $R_{11}$, $R_{12}$ und $R_{13}$ ein Wasserstoffatom oder einen substituierten oder nichtsubstituierten aromatischen Alkyl- oder Alkylarylkohlenwasserstoffrest darstellt.

**4.** Verfahren nach Anspruch 2, dadurch gekennzeichnet, daß $R_5$ ein Rest der folgenden allgemeinen Formel ist:

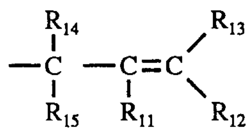

in der $R_{11}$, $R_{12}$, $R_{13}$, $R_{14}$ und $R_{15}$, gleich oder verschieden, ein Wasserstoffatom oder ein substituierter oder nichtsubstituierter Kohlenwasserstoffrest sind.

**5.** Verfahren nach Anspruch 1, dadurch gekennzeichnet, daß $R_5$ eine $C_nH_{2n+1}$-Gruppe darstellt, in der n eine ganze Zahl zwischen 8 und 20 ist.

**6.** Verfahren nach Anspruch 1, dadurch gekennzeichnet, daß das substituierte Hydroxychinolin der allgemeinen Formel VIII entspricht:

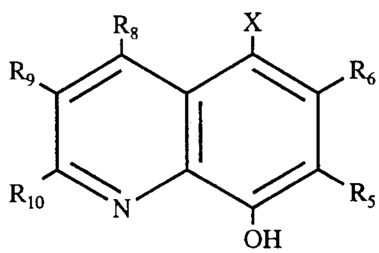

in der $R_5$ ein Alkyl- oder Alkenylrest mit 8 bis 20 Kohlenstoffatomen und X ein Halogenatom ist.

**7.** Verfahren nach einem der vorhergehenden Ansprüche, dadurch gekennzeichnet, daß die wäßrige Lösung mindestens 1 Mol/l Nitrationen enthält vorzugsweise zwischen 1 und 10 Mol/l.

**8.** Verfahren nach einem der vorhergehenden Ansprüche, dadurch gekennzeichnet, daß der pH-Wert der zuverarbeitenden wäßrigen Lösung zwischen 1 und 7 liegt.

**9.** Verfahren nach einem der vorhergehenden Ansprüche, dadurch gekennzeichnet, daß die Konzentration der anionischen Extraktionsmittel zwischen 0,1 und 0,7 Mol/l liegt.

**10.** Verfahren nach einem der vorhergehenden Ansprüche, dadurch gekennzeichnet, daß die Konzentration an substituiertem Hydroxychinolin zwischen 0,05 und 1,25 Mol/l liegt.

**11.** Verfahren nach einem der vorhergehenden Ansprüche, dadurch gekennzeichnet, daß die in der organischen Phase vorliegenden Seltenen Erden durch Waschen mit einer Säurelösung wieder zurückextrahiert werden.

**12.** Verfahren nach einem der vorhergehenden Ansprüche, dadurch gekennzeichnet, daß das in der wäßrigen Lösung vorliegende Yttrium nach der Extraktion der anderen Seltenen Erden durch flüssig/flüssig-Extraktion zurückgewonnen wird.

**13.** Verfahren nach einem der Ansprüche 1 bis 11, dadurch gekennzeichnet, daß das in der wäßrigen Lösung vorliegende Yttrium nach der Extraktion der anderen Seltenen Erden durch Fällung zurückgewonnen wird.

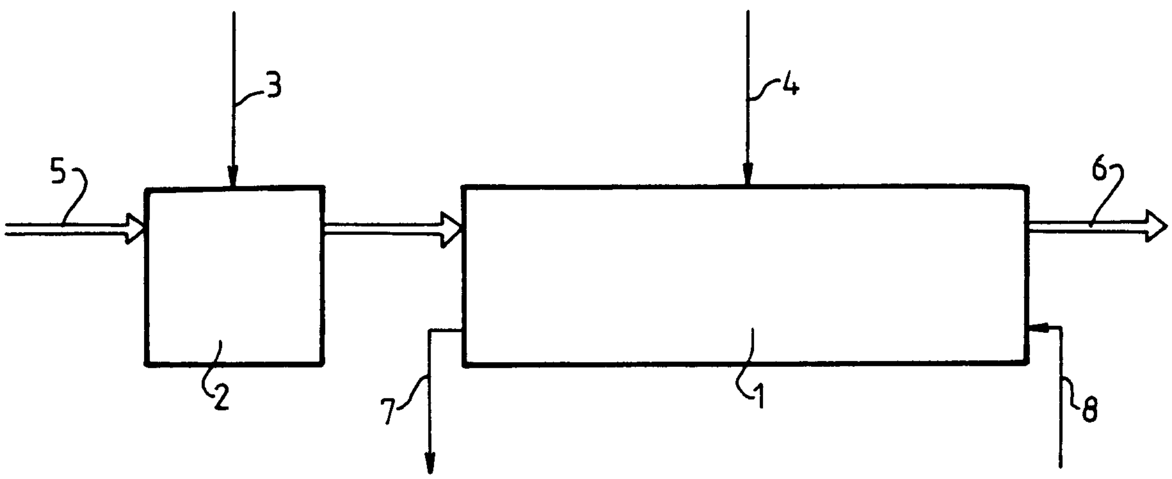
3
4
5
6
2
7
1
8